# EUROPEAN PATENT APPLICATION

(11) **EP 3 925 941 A1**
(43) Date of publication of application: **22.12.2021**
(21) Application number: 20181001.7
(22) Date of filing: 19.06.2020
(51) Int. Cl.: C04B 28/04, C04B 40/00, C04B 103/30

(54) **METHOD FOR THE INCREASE OF WORKABILITY OF A BINDER COMPOSITION COMPRISING PORTLAND CEMENT, CALCINED CLAY, AND LIMESTONE**

(71) Applicant: SIKA TECHNOLOGY AG, 6340 Baar (CH)
(72) Inventor: Juilland, Patrick, 3005 Bern (CH); Frunz, Lukas, 8305 Dietlikon (CH); Eberhardt, Arnd, 8400 Winterthur (CH); Gallucci, Emmanuel, 8048 Zürich (CH); Pegado, Luis, 5200 Brugg (CH); Schönenberger, Denise, 8483 Kollbrunn (CH); Tarnutzer, Carina, 8156 Oberhasli (CH)
(74) Representative: Sika Patent Attorneys

(57) **Abstract**

The present invention relates to a method for increasing the workability of a binder composition comprising calcined clay, limestone, and Portland cement. Said method comprises a step of adding an admixture comprising at least one PCE and at least one additive selected from the group consisting of sugar acids, sugars, sugar alcohols, and hydroxycarboxylic acids. The invention also relates to an admixture to be used in said method and hardenable compositions, especially concrete and mortar, obtainable by said method.

## Description

### Technical Field

The present invention relates to a method for increasing the workability of a binder composition comprising calcined clay, limestone, and Portland cement. Said method comprises a step of adding an admixture comprising at least one PCE and at least one additive. The invention also relates to an admixture to be used in said method and hardenable compositions, especially concrete and mortar, obtainable by said method.

### Background of the invention

Cement-based building materials, especially concrete or mortars, rely on cementitious materials as binders. Cementitious binders typically are hydraulic binders the most abundant of which are Portland cements. Due to the rapid rate of infrastructure development in most parts of the world there is an enormous demand for Portland cements. However, the use of Portland cement is associated with a high environmental footprint. One major reason are the high CO₂ emissions associated with the manufacture of Portland cements which are estimated to amount to 0.8 kg CO₂ per kg of Portland cement clinker produced. Various approaches have therefore been taken to at least partially replace Portland cements from the binder composition in concrete and mortars.

One particularly appealing approach is the partial replacement of Portland cement clinker by supplementary cementitious materials such as fly ash or slag. But the use of many supplementary cementitious materials is limited by their availability or by technical constraints in the present art.

Portland-limestone cements are one kind of Portland cements which are regulated by standard EN 197-1:2000. These cements can contain up to 20 weight-% or even up to 35 weight-% of limestone apart from the Portland clinker. But as a rule, the substitution of Portland clinker in the ground cement by limestone of similar or higher surface area results in lower strength since most of the limestone does not react. Several composite binders have therefore been developed to overcome this problem.

WO 2010/130511 discloses a binder composition comprising Portland cement clinker, calcined clay or metakaolin, and limestone. Such binder compositions are shown to yield compressive strength comparable to pure Portland cement based materials but at lower CO₂ emissions, especially if higher amounts of metakaolin are present.

WO 2014/032018 discloses concrete with low cement content wherein Portland cement clinker is replaced by mixtures of limestone and metakaolin. It was shown therein that fine limestone powder is necessary to achieve a similar compressive strength development as with pure Portland cement based materials.

Admixtures can be used to further increase the strength of certain binder compositions based on Portland clinker, calcined clay, and limestone. The use of trialkanolamines is for example described in US 2019/0144334.

However, when employing binder compositions comprising Portland cement clinker, metakaolin, and limestone problems with workability are frequently encountered. Especially when higher amounts of calcined clay or metakaolin and/or fine limestone materials are being used in such binder compositions, a lower workability, measurable for example as a lower initial slump flow or a reduced slump life, is encountered. Or, in other words, the water demand for such binder compositions is increased if the same workability is to be achieved.

Water reducers, plasticizers, and superplasticizers are common admixtures in the production of concrete and mortars. These materials can be used to reduce the water demand of a given concrete or mortar mix and/or to increase its workability. Polycarboxylate esters or ethers (PCE) are one particularly suitable type of superplasticizers for cement-based building materials. Such polycarboxylate ethers are for example described in WO 2010/085425 and EP 1138697.

However, when PCE are used with binder compositions comprising Portland cement clinker, metakaolin, and limestone, the workability is still not satisfying and especially the slump life, that is the retention of a certain slump flow over time, is not long enough. The dosage of PCE to achieve a desired workability must thus be increased which adds significant cost to the overall material composition. Additionally, the use of PCE, especially at increased dosages, in such binder compositions frequently leads to retardation of the system and thus the compressive strength after a given time can be too low.

CN 110627393 discloses mortar mixtures comprising Portland cement clinker, calcined clay, and limestone as a binder composition together with a polycarboxylate based water reducer. However, no effect on workability and especially slump life is reported.

There is thus a need for suitable methods and admixtures for binder compositions comprising Portland cement clinker, metakaolin, and limestone, which are able to overcome the disadvantages of the prior art.

### Summary of the invention

It is the goal of the present invention to provide binder compositions comprising calcined clay, limestone, and Portland cement and which have an increased workability. Preferably, such binder compositions should not show a strong retardation of hardening. Especially the increased workability should be achieved without a significant influence on strength after 1d of curing. It is another goal of the present invention to provide hardenable compositions, especially concrete and mortars, using such improved binder compositions comprising calcined clay, limestone, and Portland cement.

It has been found that the workability of a binder composition comprising calcined clay, limestone, and Portland cement can be significantly improved by adding an admixture comprising at least one polycarboxylate ether or polycarboxylate ester (PCE) and at least one additive. The present invention thus relates to a method for increasing the workability of a binder composition comprising calcined clay, limestone, and Portland cement, said method comprising a step of adding an admixture comprising at least one PCE and at least one additive. The additive is chosen from the group consisting of sugar acids, sugars, sugar alcohols, and hydroxycarboxylic acids. Surprisingly it has been found that the at least one additive, which is chosen from materials commonly used as retarders in concrete and mortar applications, when used in a method of the present invention does not delay the hardening to a level which would be not acceptable for practical applications.

### Ways of carrying out the invention

In a first aspect the present invention relates to a method for increasing the workability of a binder composition comprising calcined clay, limestone, and Portland cement, said method comprising a step of adding an admixture comprising at least one PCE and at least one additive.

Within the present context the term slump life refers to the amount of time elapsed until the initial slump flow of a binder composition has decreased to a given minimum. The slump life can be determined by measuring the slump flow of a binder composition mixed up with water according to EN 12350-8. The measurement of slump flow is repeated on material of the same mix but after different times after mixing with water. Within the present context, the slump life is the amount of time elapsed until the slump flow as measured according to DIN EN 12350-8 has decreased to 37.5 mm, which is the minimum value still measurable. A binder composition has an increased slump life if the time elapsed from the addition of water to said binder composition and until the slump flow of said binder composition has dropped to a given minimum level, in the present case 37.5 mm, is longer as compared to the time elapsed from the addition of water to a comparative binder composition and until the slump flow of said comparative composition has dropped to a given minimum level, in the present case 37.5 mm. The slump flow according to EN 12350-8 is a measure for the workability of a binder composition. The slump life refers to the time period over which the workability of a binder composition does not drop below an acceptable level. An increased initial slump flow and/or an increased slump life is thus a measure for an increased workability.

A method of the present invention is a method for increasing the workability of a binder composition comprising calcined clay, limestone, and Portland cement. A measure for the workability is the slump flow and/or the slump life. A particularly preferred measure for the workability is the slump life. Within the present context an increased initial slump flow and/or increased slump life corresponds to an increased workability. The method of the present invention thus increases the initial slump flow of a binder composition and/or increases the time elapsed from the addition of water to a binder composition and until the slump flow of said binder composition has dropped to a given minimum level, in the present case 37.5 mm. This increase in initial slump flow and/or slump life is relative to the same binder composition but without addition of the admixture of the present invention. Thus, the increase in workability is relative to the same binder composition but without addition of the admixture of the present invention. Additionally, the addition of an admixture of the present invention to a binder composition of the present invention does not significantly retard the hardening of said binder composition after the addition of water.

It is particularly preferred that the method of the present invention is a method for increasing the slump life of a binder composition comprising calcined clay, limestone, and Portland cement.

A binder composition within the present context is a mineral binder composition. A mineral binder composition of the present invention comprises calcined clay, limestone, and Portland cement.

Throughout the present invention the term "clay" refers to a solid material composed to at least 30 wt.-%, preferably to at least 35 wt.-%, especially to at least 75 wt.-%, each relative to its dry weight, of clay minerals. Such clay minerals preferably belong to the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite) or mixtures thereof. Clay minerals belonging to the kaolin group, especially kaolinite, and micas, especially muscovite and illite, as well as mixtures thereof are especially preferred. A calcined clay (CC) is a clay material that has been put to a heat treatment, preferably at a temperature between 500 - 900 °C, or in a flash calcination process at temperatures between 800 - 1100 °C. A suitable flash calcination process is for example described in WO 2014/085538. A calcined clay is an anhydrous material. According to embodiments, calcined clays are produced by heat treatment separately from other constituents of the binder composition and especially separately from the Portland cement and/or other pozzolanic and/or latent hydraulic materials present. It is preferred within the present context that during the calcination of clay the clay material is dehydroxylated to an amorphous material while the formation of crystalline high temperature aluminosilicate phases such as mullite is prevented. Calcined clays, and especially calcined kaolinite, generally are amorphous, have a significantly higher specific surface as compared to the original clay, and have a pozzolanic activity. According to especially preferred embodiments of the present invention, the calcined clay is metakaolin. Metakaolin is a material resulting from the calcination of kaolinite or minerals that are rich in kaolinite, e.g. have a content of kaolinite of at least 30 wt.-%, preferably to at least 35 wt.-%, relative to its dry weight. Calcination temperatures for the manufacturing of metakaolin typically are in the range of 500 - 900 °C.

According to embodiments, the calcined clay is ground to a powder with a 45 µm residue as measured according to ASTM C 430-96 (2003) of at least 0.5 wt.-%, preferably at least 2 wt.-%, still more preferably at least 10 wt.-%, especially at least 20 wt.-%.

In preferred embodiments of the present invention the chemical compositions of limestone (L) and Portland cement (P) are as defined in standard EN 197-1:2011. In the alternative, limestone (L) may also stand for magnesium carbonate, dolomite, and or mixtures of magnesium carbonate, dolomite, and/or calcium carbonate. It is especially preferred that limestone (L) within the present context is a naturally occurring limestone mainly consisting of calcium carbonate (typically calcite and/or aragonite) but typically also containing some magnesium carbonate and/or dolomite. Limestone (L) may also be a naturally occurring marl.

Limestone (L), within the present context, is a ground material that is not heat treated. Especially, the limestone is not decarbonated. According to embodiments, the limestone has a Blaine surface of 3'000 - 15'000 cm²/g.

The Blaine surface is measured as described in standard EN 196-6:2010.

According to embodiments, Portland cement is of the type CEM I, CEM II, CEM III, CEM IV or CEM V according to standard EN 197-1. Portland cements which are described in alternative standards, for example ASTM standards or Chinese standards are equally suitable. According to preferred embodiments, Portland cement is of type CEM I. According to embodiments, the Portland clinker content in a Portland cement of the present invention is at least 35 w%, preferably at least 65 wt.-%, especially at least 95 wt.-%, each based on the total dry weight of the cement. According to embodiments, the Portland cement clinker has an aluminium content, expressed as Al₂O₃, of less than 10 wt.-%, preferably less than 8 wt.-%, more preferably less than 6 wt.-%, in each case relative to the total dry weight of the clinker. According to especially preferred embodiments, the Blaine surface of the Portland cement as measured according to standard EN 196-6:2010 is between 1'500 - 10'000 cm²/g, preferably 2'000 - 9'000 cm²/g, especially 3'000 - 7'000 cm²/g. Preferably, the sulphate content of Portland cements of the present invention is optimized to an SO₃ content of not more than 4.0 wt.-%, relative to the total dry weight of the cement.

According to embodiments, the binder composition of the present invention comprises calcined clay (CC), limestone (L), and Portland cement (P) in the following weight ratios:
P : CC is from 33 : 1 to 1 : 1, preferably from 8 : 1 to 1 : 1,
CC : L is from 10 : 1 to 1 : 33, preferably from 5 : 1 to 1 : 10, and
P : L is from 20 : 1 to 1 : 4, preferably from 5 : 1 to 1 : 1.

According to embodiments, the binder composition of the present invention consists to at least 65 wt.-%, preferably at least 80 wt.-%, more preferably at least 92 wt.-%, in each case relative to the total dry weight of the composition, of calcined clay, limestone, and Portland cement.

According to embodiments of the present invention, a binder composition comprises a mixture of
a) 25 - 100 mass parts of Portland cement (P),
b) 3 - 50 mass parts of calcined clay (CC), especially of metakaolin,
c) 5 - 100 mass parts of limestone (L).

Especially, in such binder compositions, the mass ratios of calcined clay (CC), limestone (L), and Portland cement (P) are as follows:
P : CC is from 33 : 1 to 1 : 1, preferably from 8 : 1 to 1 : 1,
CC : L is from 10 : 1 to 1 : 33, preferably from 5 : 1 to 1 : 10, and
P : L is from 20 : 1 to 1 : 4, preferably from 5 : 1 to 1 : 1.

According to a specific embodiment of the present invention, a binder composition consists of a mixture of
a) 50 mass parts of Portland cement **(P),**
b) 20 - 50 mass parts of calcined clay **(CC),** especially of metakaolin,
c) 10 - 50 mass parts of limestone **(L).**

In particular, a binder composition of the present invention does comprise calcium aluminate cement according to EN 14647 and/or calcium sulphoaluminate cement in not more than 5 wt.-%, preferably not more than 2 wt.-%, relative to the total dry weight of the binder composition. Especially, the content of Portland cement in a binder composition of the present invention is higher than the content of calcium aluminate cement and/or calcium sulphoaluminate cement.

According to embodiments, a binder composition of the present invention additionally comprises calcium sulfate in an amount of 1 - 8 wt.-%, relative to the total dry weight of the composition. A binder composition of the present invention does not comprise calcium sulfate as the main binder. Calcium sulfate can be in the form of gypsum, calcium sulfate dihydrate, calcium sulfate hemihydrate (in the alpha or beta form), and/or anhydrite.

According to embodiments, a binder composition of the present invention additionally comprises further latent hydraulic and/or pozzolanic materials. Suitable further latent hydraulic and/or pozzolanic materials are, for example, volcanic rock, pumice, glass dust, diatomaceous earth, fumed silica, precipitated silica, slag, fly ash, silica fume, and/or burnt slate. According to certain embodiments, the binder composition comprises up to 20 wt.-%, preferably up to 5 wt.-%, in each case relative to the total dry weight of the composition, of further latent hydraulic and/or pozzolanic materials.

A suitable binder composition of the present invention may thus consist to an extent of at least 65 wt.-%, preferably at least 80 wt.-%, more preferably at least 92 wt.-%, in each case relative to the total dry weight of the composition, of calcined clay **(CC),** limestone **(L),** and Portland cement **(P)** in weight ratios of **P** : **CC** from 33 : 1 to 1 : 1, preferably from 8 : 1 to 1 : 1, **CC** : **L** from 10 : 1 to 1 : 33, preferably from 5 : 1 to 1 : 10, and **P : L** from 20 : 1 to 1 : 4, preferably from 5 : 1 to 1 : 1, and of 1 - 8 wt.-% of calcium sulfate.

According to embodiments of the present invention, a binder composition consists to 92 - 99 wt.-%, relative to the total dry weight of the binder composition, of a mixture of
a) 25 - 100 mass parts of Portland cement (P),
b) 3 - 50 mass parts of calcined clay **(CC),** especially of metakaolin,
c) 5 - 100 mass parts of limestone **(L),** and to
   1 - 8 wt.-%, relative to the total dry weight of the binder composition, of calcium sulfate.

According to a specific embodiment of the present invention, a binder composition consists to 92 - 99 wt.-%, relative to the total dry weight of the binder composition, of a mixture of
a) 50 mass parts of Portland cement **(P),**
b) 20 - 50 mass parts of calcined clay **(CC),** especially of metakaolin,
c) 10 - 50 mass parts of limestone **(L),** and
   to 1 - 8 wt.-%, relative to the total dry weight of the binder composition, of calcium sulfate.

Especially, in such binder compositions, the mass ratios of calcined clay **(CC),** limestone **(L),** and Portland cement **(P)** are as follows:
**P : CC** is from 33 : 1 to 1 : 1, preferably from 8 : 1 to 1 : 1,
**CC : L** is from 10 : 1 to 1 : 33, preferably from 5 : 1 to 1 : 10, and
**P : L** is from 20 : 1 to 1 : 4, preferably from 5 : 1 to 1 : 1.

According to preferred embodiments, where a binder composition consists to 92 - 99 wt.-%, relative to the total dry weight of the binder composition, of a mixture of
a) 25 - 100 mass parts of Portland cement **(P),**
b) 3 - 50 mass parts of calcined clay **(CC),** especially of metakaolin,
c) 5 - 100 mass parts of limestone **(L),** and to
   1 - 8 wt.-%, relative to the total dry weight of the binder composition, of calcium sulfate, such binder composition does not contain any further latent hydraulic and/or pozzolanic materials, especially does not contain any of volcanic rock, pumice, glass dust, diatomaceous earth, fumed silica, precipitated silica, slag, fly ash, silica fume, and/or burnt slate.

A binder composition of the present invention is obtainable by intermixing of the constituents in dry form. Suitable methods of mixing are known to the person skilled in the art. Especially, a binder composition of the present invention can be obtained by intermixing calcined clay, limestone, and optionally calcium sulfate, followed by blending this mix with Portland cement. Other orders of mixing are, however, also possible. It is also possible to intergrind two or more of the constituents of a binder composition. It is, however, preferred within the present context that the calcined clay be ground separately of the other constituents. According to especially preferred embodiments, a binder composition of the present invention is obtained by mixing the constituents of the binder composition in dry form. It is particularly not possible within the present context to produce a binder composition by mixing the constituents followed by a heat treatment or clinkering procedure. It is thus, for example, not possible to prepare a binder composition of the present invention by mixing calcined clay, limestone, optionally calcium sulfate and Portland cement followed by a step of heating the resulting mix to more than 150 °C, especially in a kiln.

It is preferred for a binder composition of the present invention to be essentially free of water. Essentially free of water means that the water content is below 5 wt.-%, preferably below 1 wt.-%, especially below 0.5 wt.-%, relative to the total weight of the binder composition. A binder composition within the present invention is therefore generally also referred to as a dry binder composition.

An admixture to be used in a method of the present invention comprises at least one polycarboxylate ether and/or polycarboxylate ester (PCE). According to embodiments, the at least one PCE is one copolymer or a mixture of two or more copolymer, wherein each copolymer comprises
(i) repeating units A of the general structure (I), 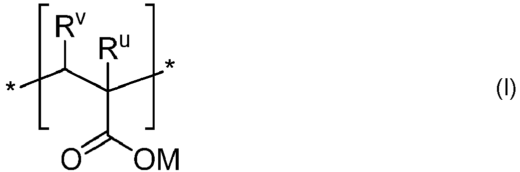 and
(ii) repeating units B of the general structure (II), 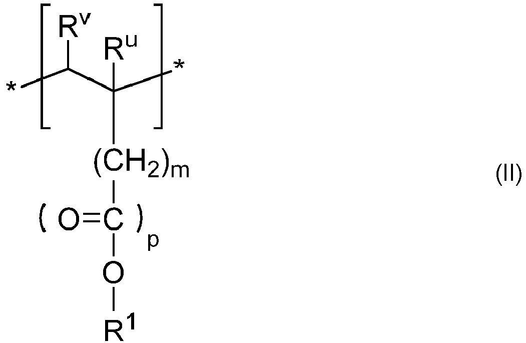 wherein
   each R^{u} independently of one another is H or a methyl group,
   each R^{v} independently of one another is H or COOM,
   each M independently of one another is H, an alkali metal ion or an alkaline earth metal ion,
   m = 0, 1, 2 or 3,
   p = 0 or 1,
   each R¹ independently of one another is -[YO]ₙ-R⁴, wherein Y is a C2- to C4-alkylene and R⁴ is H, C1- to C20-alkyl, -cyclohexyl or -alkylaryl, and n = 2 - 350,
   and wherein the repeating units **A** and **B** in the copolymer have a molar ratio **A** : **B** between 10 : 90 - 90 :10, preferably 20 : 80 - 80 : 20, more preferably 30 : 70 - 80 : 20, especially 35 : 65 - 75 : 25.

According to preferred embodiments, YO is ethylene oxide and/or propylene oxide, especially ethylene oxide. According to further preferred embodiments, n is 10 - 250, preferably 30 - 200, more preferably 35 - 200, especially 40 - 110.

PCE according to the present invention can be statistical or non-statistical copolymers. Non-statistical copolymers are in particular alternating copolymers or block or gradient copolymers or mixtures thereof.

Copolymers CP according to the invention, which are random copolymers, can be obtained by free radical polymerization of mixtures comprising at least one olefinically unsaturated carboxylic acid monomer of the general structure (Ia) 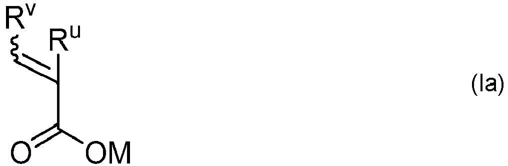 and at least one olefinically unsaturated monomer of the general structure (IIa) 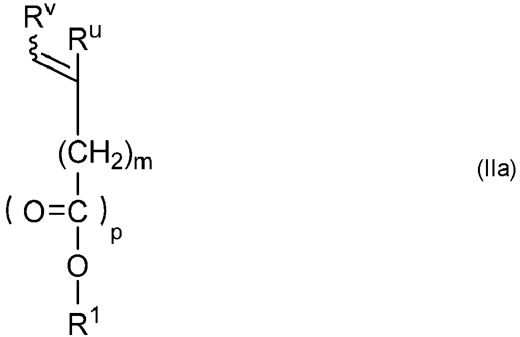 wherein Ru, Rv, M, m, p, and R1 have the meanings given above and the coiled bond represents both cis and trans double bond isomers or a mixture thereof.

Suitable conditions for carrying out free radical polymerization are known per se to the person skilled in the art and are described, for example, in EP 1 103 570.

PCE according to the present invention, which are non-statistical copolymers, in particular block or gradient copolymers, can preferably be produced by living free radical polymerization. The techniques of living free radical polymerization include nitroxide-mediated polymerization (NMP), atom transfer radical polymerization (ATRP) or reversible addition fragmentation chain transfer polymerization (RAFT). Living free radical polymerization is essentially performed in the absence of irreversible transfer or termination reactions. The number of active chain ends is low and remains essentially constant during polymerization. In RAFT polymerization, for example, this is achieved by using a RAFT agent and only a small amount of initiator. This allows a substantially simultaneous and continuous growth of the chains during the entire polymerization process. This makes it possible to produce block or gradient copolymers with this process and accordingly a narrow molecular weight distribution or polydispersity of the polymer is obtained. This is not possible with the conventional "free radical polymerization" or the non-living free radical polymerization.

PCE according to the present invention can also be produced by a polymer-analogous reaction. In particular, PCE according to the present invention can be produced by the esterification of a homopolymer or copolymer comprising repeating units of the general structure (I) with polyalkylene glycols of the general structure (III)

HO-R¹ (III),

where R1 has the meaning given above.

Suitable processes for the production of PCE by esterification are known to the person skilled in the art per se and are described, for example, in EP 1138697.

In addition to the at least one olefinically unsaturated carboxylic acid monomer of the general structure (Ia) and the at least one olefinically unsaturated macromonomer of the general structure (IIa), PCE according to the present invention may comprise one or more further monomers **M.** These further monomers **M** may be selected from styrene, ethylene, propylene, butylene, butadiene, isoprene, vinyl acetate, vinyl chloride, acrylonitrile, N-vinylpyrrolidone, hydroxyalkyl (meth)acrylates, (meth)acrylamides, and/or maleimides.

It is preferred that the molar proportion of the one or more further monomers **M** is equal to or less than 66 mol%, preferably equal to or less than 50 mol%, more preferably equal to or less than 25 mol%, particularly preferably equal to or less than 10 mol%, in particular equal to or less than 5 mol%, in each case based on all the monomers which form the PCE copolymer. In a very particularly preferred embodiment, the PCE is essentially free of further monomer units **M.** Accordingly, a PCE according to the present invention consists to at least 34 mol%, preferably at least 50 mol%, more preferably at least 75 mol%, more preferably at least 90 mol%, particularly preferably at least 90 mol%, especially to 100 mol%, of the repeating units A and B.

According to a particularly preferred embodiment an admixture to be used in a method of the present invention comprises one polycarboxylate ether (PCE). According to embodiments, the PCE is a copolymer comprising or consisting of
(i) repeating units A of the general structure (I), 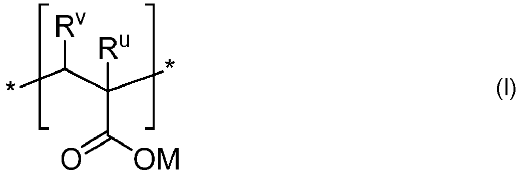 and
(ii) repeating units B of the general structure (II), 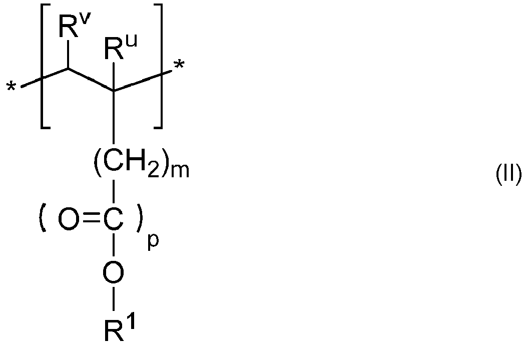 wherein
   each Ru independently represents hydrogen or a methyl group
   each Rv independently represents hydrogen or COOM,
   each M is independently H, an alkali metal ion, or an alkaline earth metal ion,
   m = 0, 1, 2 or 3
   p = 0 or 1,
   each R1 is independently -[YO]ₙ-R⁴, wherein Y is C2 to C4 alkylene and R⁴ is H, C1 to C20 alkyl, cyclohexyl or alkylaryl, and n = 2 - 350, and
   wherein the repeating units A and B in the copolymer CP have a molar ratio of A : B in the range from 10 : 90 - 90 : 10.

According to embodiments, the at least one PCE can be in the form of a liquid solution or dispersion, preferably in water. The amount of PCE in such an aqueous solution or dispersion preferably is at least 20 wt.-%, preferably at least 35 wt.-%, relative to the total weight of the aqueous solution or dispersion.

According to other embodiments, the at least one PCE can be in the form of a solid, especially in the form of a powder. Methods of manufacturing PCE in powder form are known to the person skilled in the art. One particularly suitable method is spray drying.

An admixture to be used in a method of the present invention comprises at least one additive. An additive within the present context is a compound selected from the group consisting of sugar acids, sugars, sugar alcohols, hydroxycarboxylic acids.

Sugar acids within the present context belong to any of the classes of aldonic acids, ulosonic acids, uronic acids or aldaric acids. Preferably, it is an aldonic acid. Examples for sugar acids useful in the context of the present invention include but are not limited to glyceric acid, xylonic acid, gluconic acid, ascorbic acid, neuraminic acid, glucuronic acid, galacturonic acid, iduronic acid, tartaric acid, mucic acid, and saccharic acid. The sugar acid may be present in form of the free acid or as a salt. According to embodiments, salts of sugar acids can be salts with metals of groups la, Ila, Ib, IIb, IVb, VIIIb of the periodic table of elements. It is preferred, within the present context, that the sugar acid is not an amide or ester of sugar acids.

Sugars within the present context belong to the group of monosaccharides or disaccharides. Examples of sugars include but are not limited to glycerinaldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose. Sugars, within the present context, also relate to melasse, vinasse, and caramel.

A sugar alcohol in the context of the present invention is a polyhydric alcohol derivable from sugars by a redox reaction. Sugar alcohols thus belong to the class of alditols. Examples for sugar alcohols include but are not limited to ethylene glycol, glycerol, diglycerol, threitol, erythritol, pentaerythritol, dipentaerythritol, xylitol, ribitol, arabitol, sorbitol, sorbitan, isosorbide, mannitol, dulcitol, fucitol, iditol, inositol, volemitol, lactitol, maltitol, isomalt, maltotriitol, maltotetraitol, and polyglycitol.

A hydroxycarboxylic acid in the context of the present invention is a carboxylic acid additionally comprising an OH-moiety within the same molecule. Examples for hydroxycarboxylic acids include but are not limited to malic acid, citric acid, isocitric acid, tartronic acid, mandelic acid, salicylic acid, and lactic acid. The hydroxycarboxylic acid may be present in form of the free acid or as a salt. According to embodiments, salts of hydroxycarboxylic acids can be salts with ammonium or with metals of groups la, Ila, Ib, IIb, IVb, VIIIb of the periodic table of elements. Preferred salts of hydroxycarboxylic acids are alkali metal salts, earth alkali metal salts or ammonium salts.

According to preferred embodiments, the additive is selected from sucrose, melasse, dulcitol, or an alkali metal salt of any of gluconate, xylonate, or glucuronate.

According to an especially preferred embodiment the additive is sodium gluconate.

It has been found that amines cannot be used as an additive in a method and/or admixture of the present invention. Amines do not lead to a significant increase in workability. The term amines in this context also includes N-alkoxylated amines such as alkanolamines, alkoxylated polyalkylene polyamines, and polyhydroxylated alkylenamines. It is thus especially not possible to use alkanolamines and/or polyhydroxylated alkylenamines as an additive within the present invention. Examples for alkanolamines are triethanolamine, triisorponaolamine, diethanolisopropanolamine, methyldiethanolamine, ethanoldiisoproanolamine, and tetraethanolethylenediamine. An example for polyhydroxylated alkylenamines is tetra(hydroxyethyl) ethylenediamine.

It has been found that the dosage of the admixture in a method of the present invention depends on the composition of the binder composition. Without wishing to be bound by theory, it is believed that a higher amount of calcined clay in the binder composition requires a higher amount of admixture.

According to preferred embodiments, the admixture of the present invention is added to the binder composition in a method of the present invention in such an amount that a weight ratio of the at least one additive to calcined clay is in the range of 1 : 1'500 to 1 : 10, preferably 1 : 800 to 1 : 100, more preferably 1 : 650 to 1 : 200, still more preferably 1: 580 to 1 : 300. To calculate this weight ratio, the total amount of additive is taken into account. This means, that where one additive is used in an admixture of the present invention, the weight amount of this one additive is used for the calculation and where two or more additives are used, the summarized weight amount of all additives is used for the calculation.

According to embodiments, the weight ratio of the at least one PCE to calcined clay in said hardenable composition is in the range of 1 : 600 to 1 : 50, preferably 1 : 500 to 1 : 100, especially 1 : 150 to 1 : 100. To calculate this weight ratio, the total amount of PCE is taken into account. This means, that where one PCE copolymer is used in an admixture of the present invention, the weight amount of this one PCE copolymer is used for the calculation and where two or more PCE copolymers are used, the summarized weight amount of all PCE copolymers is used for the calculation.

According to especially preferred embodiments the at least one PCE and the at least one additive are added in a method of the present invention in a weight ratio of the at least one PCE to the at least one additive of 20 : 1 to 1 : 10, preferably of 10 : 1 to 1 : 6, more preferably of 5 : 1 to 1 : 2, especially 5 : 1 to 1.5 : 1.

In a second aspect, the present invention relates to an admixture which can be used in a method as described above, said admixture comprising
a) at least one PCE
b) at least one additive selected from the group of sugar acids, sugars, sugar alcohols, and hydroxycarboxylic acids.

According to especially preferred embodiments of the present invention the at least one additive used in an admixture of the present invention is selected from the group consisting of sucrose, melasse, dulcitol, or an alkali metal salt of any of gluconate, xylonate, or glucuronate, especially preferred the additive is sodium gluconate.

Preferably, the admixture comprises the at least one PCE and the at least one additive in a weight ratio of the at least one PCE to the at least one additive of 20 : 1 to 1 : 10, preferably of 10 : 1 to 1 : 6, more preferably of 5 : 1 to 1 : 2, especially 5 : 1 to 1.5 : 1.

According to embodiments, an admixture of the present invention additionally comprises water.

According to embodiments, an admixture of the present invention consists of at least one PCE and at least one additive, and optionally water, wherein the at least one PCE and the at least one additive have a weight ratio of the at least one PCE to the at least one additive of 20 : 1 to 1 : 10, preferably of 10 : 1 to 1 : 6, more preferably of 5 : 1 to 1 : 2, especially 5 : 1 to 1.5 : 1.

According to embodiments, an admixture of the present invention comprises one PCE and one additive in a weight ratio of the PCE to the additive of 20 : 1 to 1 : 10, preferably of 10 : 1 to 1 : 6, more preferably of 5 : 1 to 1 : 2, especially 5 : 1 to 1.5 : 1.

According to embodiments, an admixture of the present invention consists of one PCE, at least one additive, and optionally water, wherein the PCE and the at least one additive have a weight ratio of the PCE to the additive of 20 : 1 to 1 : 10, preferably of 10 : 1 to 1 : 6, more preferably of 5 : 1 to 1 : 2, especially 5 : 1 to 1.5 : 1.

According to embodiments, an admixture of the present invention consists of one PCE, one additive, and optionally water, wherein the PCE and the additive have a weight ratio of the PCE to the additive of 20 : 1 to 1 : 10, preferably of 10 : 1 to 1 : 6, more preferably of 5 : 1 to 1 : 2, especially 5 : 1 to 1.5 : 1.

To calculate these weight ratios, the total amount of PCE and the total amount of additive is taken into account. This means, that where one PCE is used in an admixture of the present invention, the weight amount of this one PCE is used for the calculation and where two or more PCE are used, the summarized weight amount of all PCE is used for the calculation. The same applies for the additive.

According to an especially preferred embodiment, an admixture of the present invention consists of
a) one PCE
b) one additive selected from the group of sugar acids, sugars, sugar alcohols, and hydroxycarboxylic acids, and
c) optionally water,
wherein the PCE and the additive have a weight ratio of the PCE to the additive of 20 : 1 to 1 : 10, preferably of 10 : 1 to 1 : 6, more preferably of 5 : 1 to 1 : 2, especially 5 : 1 to 1.5 : 1.

According to especially preferred embodiments of the present invention the additive used in an admixture of the present invention is selected from the group consisting of sucrose, melasse, dulcitol, or an alkali metal salt of any of gluconate, xylonate, or glucuronate, especially preferred the additive is sodium gluconate.

According to embodiments, the admixture of the present invention is a mono-component admixture. This means that the at least one PCE and the at least on additive and optionally other constituents are pre-mixed in a weight ratio as described above. In cases where the at least one PCE and the at least one additive are liquids, said mono-component admixture can be obtained by mixing the two or more liquids by any process known to the person skilled in the art. The mono-component admixture thus obtained may be a solution, an emulsion, or a multiple-phase mixture. It may be present in form of a liquid or a paste. It may also be further processed to obtain a solid, for example by spray drying. In cases where the at least one PCE and/or the at least one additive are solids, said mono-component admixture can be obtained by mixing the two or more solids by any process known to the person skilled in the art. The mono-component admixture thus obtained may be in form of a powder or a paste. In cases where at least one of the at least one PCE and the at least one additive is a liquid and at least one of the at least one PCE and the at least one additive is a solid, said mono-component admixture can be obtained by mixing the compounds by any process known to the person skilled in the art or by absorbing the at least one liquid on the at least one solid. The mono-component thus obtained may be in the form of a solid, a paste, a dispersion, or a solution. Further constituent of the admixture, especially water, may be added separately and/or together with the at least one PCE and/or the at least one additive. According to one especially preferred embodiment, the at least one PCE is added in the form of a solution or dispersion in water.

A mono-component admixture as described above may be added in a method of the present invention during the production of the dry binder composition as described above or together with the mixing water or shortly after the mixing water.

According to embodiments, the admixture of the present invention is a two-component admixture. Such a two-component admixture has two separate components **α** and **β,** with component **α** comprising the at least one PCE as described above, and with component **β** comprising the at least one additive as described above. Component **α** and component **β** are stored in separate containers or in spatially separate compartments of one container. It is possible to pre-mix both components **α** and **β** shortly before addition to a binder composition. Premixing is possible by any process known to the person skilled in the art. The premixed components **α** and **β** may be added to the dry binder composition, together with the mixing water or shortly after the mixing water. It is likewise possible to dose both components **α** and **β** separately to a binder composition of the present invention. It is for example possible, and in certain cases also preferred, to mix both components **α** and **β** to the dry binder composition. According to certain embodiments, the components **α** and **β** are added during the production of the dry binder composition. It is likewise possible, and in certain cases preferred, to mix only one component **α** or **β** to the dry binder composition, e.g. during or after production of the dry binder composition, and add the other component **α** or **β** at a later stage, for example together with the mixing water or shortly after the mixing water. Furthermore, it is possible to add one component **α** or **β** together with the mixing water or shortly after the mixing water and the other component **α** or **β** at a later stage, for example shortly before placement or during placement. It is finally possible to add both components **α** or **β** together with the mixing water or shortly after the mixing water.

In still another aspect, the present invention refers to a hardenable composition obtainable by a method as described above.

Said hardenable composition is characterized in that it comprises
a) a binder composition comprising calcined clay **(CC),** limestone (L), and Portland cement **(P)** in weight ratios of **P : CC** from 33 : 1 to 1 : 1, preferably from 8 : 1 to 1 : 1, **CC : L** from 10 : 1 to 1 : 33, preferably from 5 : 1 to 1 : 10, and **P : L** from 20 : 1 to 1 : 4, preferably from 5 : 1 to 1 : 1,
b) at least one PCE, and
c) at least one additive selected from the group of sugar acids, sugars, sugar alcohols, and hydroxycarboxylic acids.

According to especially preferred embodiments of the present invention the additive comprised in a hardenable composition of the present invention is selected from the group consisting of sucrose, melasse, dulcitol, or an alkali metal salt of any of gluconate, xylonate, or glucuronate, especially preferred the additive is sodium gluconate.

According to preferred embodiments, the at least one PCE and the at least one additive have a weight ratio of the at least one PCE to the at least one additive of 20 : 1 to 1 : 10, preferably of 10 : 1 to 1 : 6, more preferably of 5 : 1 to 1 : 2, especially 5 : 1 to 1.5 : 1.

According to preferred embodiments, the weight ratio of the at least one additive to calcined clay in said hardenable composition is in the range of 1 : 1'500 to 1 : 10, preferably 1 : 800 to 1 : 100, more preferably 1 : 650 to 1 : 200, still more preferably 1: 580 to 1 : 300.

According to preferred embodiments, the weight ratio of the at least one PCE to calcined clay in said hardenable composition is in the range of 1 : 600 to 1 : 50, preferably 1 : 500 to 1 : 100, especially 1 : 150 to 1 : 100.

According to preferred embodiments, the hardenable composition comprises
a) a binder composition consisting of
   - 25 - 100 mass parts of Portland cement **(P)**
   - 3 - 50 mass parts of calcined clay **(CC),** especially of metakaolin,
   - 5 - 100 mass parts of limestone **(L),**
b) optionally to 1 - 8 wt.-%, relative to the total dry weight of the binder composition, of calcium sulfate,
c) at least one PCE, and
d) at least one additive selected from the group consisting of sugar acids, sugars, sugar alcohols, and hydroxycarboxylic acids,
wherein the weight ratio of the at least one additive to calcined clay is in the range of 1 : 1'500 to 1 : 10, preferably 1 : 800 to 1 : 100, more preferably 1 : 650 to 1 : 200, still more preferably 1: 580 to 1 : 300, and
wherein the weight ratio of the at least one PCE to calcined clay is in the range of 1 : 600 to 1 : 50, preferably 1 : 500 to 1 : 100, especially 1 : 150 to 1 : 100.

Preferably, in such a hardenable composition, a weight ratio of the at least one PCE to the at least one additive is from 20 : 1 to 1 : 10, preferably of 10 : 1 to 1 : 6, more preferably of 5 : 1 to 1 : 2, especially 5 : 1 to 1.5 : 1.

According to especially preferred embodiments of the present invention the additive comprised in a hardenable composition of the present invention is selected from the group consisting of sucrose, melasse, dulcitol, or an alkali metal salt of any of gluconate, xylonate, or glucuronate, especially preferred the additive is sodium gluconate.

According to preferred embodiments, the hardenable composition consists of
a) a binder composition consisting of
   - 25 - 100 mass parts of Portland cement **(P)**
   - 3 - 50 mass parts of calcined clay **(CC),** especially of metakaolin,
   - 5 - 100 mass parts of limestone **(L),**
b) optionally to 1 - 8 wt.-%, relative to the total dry weight of the binder composition, of calcium sulfate,
c) a PCE in a weight ratio of PCE to calcined clay in the range of 1 : 600 to 1 : 50, preferably 1 : 500 to 1 : 100, especially 1 : 150 to 1 : 100
d) sodium gluconate in a weight ratio of sodium gluconate to calcined clay in the range of 1 : 1'500 to 1 : 10, preferably 1 : 800 to 1 : 100, more preferably 1 : 650 to 1 : 200, still more preferably 1: 580 to 1 : 300, and
e) optionally water.

Preferably, in such a hardenable composition, a weight ratio of the at least one PCE to sodium gluconate is from 20 : 1 to 1 : 10, preferably of 10 : 1 to 1 : 6, more preferably of 5 : 1 to 1 : 2, especially 5 : 1 to 1.5 : 1.

A hardenable composition as described above and which is essentially free of water is also referred to as a dry hardenable composition within the present context. Essentially free of water means that the water content is below 5 wt.-%, preferably below 1 wt.-%, especially below 0.5 wt.-%, relative to the total weight of the hardenable composition.

In a further aspect, the present invention also relates to a hardenable composition as described above, characterized in that it further comprises water in a weight ratio of water to binder composition of between 0.1 - 0.6, preferably 0.2 - 0.5, especially 0.2 - 0.35.

Water can be any water available such as distilled water, purified water, tap water, mineral water, spring water, salt water and well water. The use of waste water is possible only in cases where the composition of such waste water is known and where none of the impurities contained may impart the functionality of any other component of the composition of the present invention. The use of salt water is only possible where its high content of chlorides and the risk of corrosion of steel reinforcement associated therewith is of no consequence, e.g. because no steel reinforcement will be embedded.

Such a hardenable composition mixed up with water is also referred to as a wet hardenable composition within the present context. Typically, a hardenable composition as described above is mixed with water only very shortly before its application. This is because upon contact with water, such hardenable composition will start to harden.

Methods and devices for mixing of a hardenable composition as described above with water are not particular limited and are known to the person skilled in the art. Mixing can be continuous, semi-continuous or batch-wise. Continuous mixing offers the advantage of a high material throughput.

According to embodiments a dry hardenable composition as described above is especially part of a dry mortar, a ready mix mortar, or dry concrete. A dry mortar, ready mix mortar, or dry concrete within the present context can be in the form of a mono-component material or in the form of a multicomponent material, for example a two component or a three component material.

A hardenable composition of the present invention may further comprise aggregates. Aggregates can be any material that is non-reactive in the hydration reaction of hydraulic binders. Aggregates can be any aggregate typically used for mortars or concrete. Typical aggregates are for example rock, crushed stone, gravel, slag, sand, especially quartz sand, river sand and/or manufactured sand, recycled concrete, glass, expanded glass, hollow glass beads, glass ceramics, volcanic rock, pumice, perlite, vermiculite, rubber particles, cork, wood flour, quarry wastes, raw, fired or fused earth or clay, porcelain, electrofused or sintered abrasives, firing support, silica xerogels, and/or fine aggregates or fillers such as ground limestone, ground dolomite, and/or ground aluminum oxide. Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1.

A hardenable composition as described above may advantageously further comprise further materials common in the mortar and/or concrete industry such as fillers, plasticizers and/or superplasticizers, air entrainers, defoamers, stabilizers, rheology modifiers, especially thickeners, water reducers, redispersible polymer powders, accelerators, retarders, water resisting agents, strength enhancing additives, fibres, dedusting agents, blowing agents, pigments, corrosion inhibitors, biocides, chromium(VI) reducers. It can be advantageous to combine two or more of the mentioned further materials in one hardenable composition.

It is to be noted that the plasticizers and/or superplasticizers are chemically different than the PCE as descried above.

The present invention therefore also refers to a hardenable composition as decribed above, said composition additionally comprising aggregate and optionally one or more further materials selected from the group consisting of fillers, plasticizers and/or superplasticizers, air entrainers, defoamers, stabilizers, rheology modifiers, especially thickeners, water reducers, redispersible polymer powders, accelerators, retarders, water resisting agents, strength enhancing additives, fibres, dedusting agents, blowing agents, pigments, corrosion inhibitors, biocides, chromium(VI) reducers. Such hardenable composition can be a dry hardenable composition or a wet hardenable composition. It is especially a mortar or a concrete, especially a concrete.

In another aspect the present invention therefore refers to a hardenable composition, preferably a mortar or a concrete, comprising
a) a binder composition comprising calcined clay (CC), limestone (L), and Portland cement **(P)** in weight ratios of **P** : **CC** from 33 : 1 to 1 : 1, preferably from 8 : 1 to 1 : 1, **CC** : **L** from 10 : 1 to 1 : 33, preferably from 5 : 1 to 1 : 10, and **P : L** from 20 : 1 to 1 : 4, preferably from 5 : 1 to 1 : 1,
b) at least one PCE, and
c) at least one additive selected from the group consisting of sugar acids, sugars, sugar alcohols, and hydroxycarboxylic acids,
d) aggregates,
e) optionally one or more further materials selected from the group consisting of fillers, plasticizers and/or superplasticizers, air entrainers, defoamers, stabilizers, rheology modifiers, especially thickeners, water reducers, redispersible polymer powders, accelerators, retarders, water resisting agents, strength enhancing additives, fibres, dedusting agents, blowing agents, pigments, corrosion inhibitors, biocides, chromium(VI) reducers, and
f) optionally water.

Preferably, in such hardenable compositions, the at least one PCE and the at least one additive have a weight ratio of the at least one PCE to the at least one additive of 20 : 1 to 1 : 10, preferably of 10 : 1 to 1 : 6, more preferably of 5 : 1 to 1 : 2, especially 5 : 1 to 1.5 : 1.

According to preferred embodiments, the weight ratio of the at least one additive to calcined clay in such hardenable compositions is in the range of 1 : 1'500 to 1 : 10, preferably 1 : 800 to 1 : 100, more preferably 1 : 650 to 1 : 200, still more preferably 1: 580 to 1 : 300.

According to preferred embodiments, the weight ratio of PCE to calcined clay in such hardenable composition, preferably a mortar or a concrete, is in the range of 1 : 600 to 1 : 50, preferably 1 : 500 to 1 : 100, especially 1 : 150 to 1 : 100.

According to embodiments, water is present in a weight ratio of water to binder composition in a range of between 0.1 - 0.6, preferably 0.2 - 0.5, especially 0.2 - 0.35.

Upon mixing with water, a hardenable composition of the present invention will start to set and harden. The setting and hardening of a wet hardenable composition of the present invention proceeds with time and physical properties, e.g. compressive strength, are developed thereby. A wet hardenable composition of the present invention will harden at various temperatures. According to embodiments a wet hardenable composition of the present invention is hardened at temperatures between +4 °C and +50 °C, preferably between +5 °C and +35 °C. According to further embodiments a wet hardenable composition of the present invention is hardened at temperatures above 50 °C and as high as 150°C. Such high temperatures may, for example, be encountered in tunneling or mining applications, e.g. in oil wells. It is highly preferred to harden a wet hardenable composition of the present invention at a pressure of appr. 1023 mbar. It is also possible to harden and cure a wet hardenable composition of the present invention at elevated pressure, for example in an autoclave. Hardening and curing is typically finished after 28 days. However, especially depending on temperature, pressure, and humidity, hardening and curing may already be finished after less than 28 days or last longer than 28 days.

In another aspect the present invention relates to the hardened bodies resulting from hardening and curing a wet hardenable composition, especially a mortar or concrete, of the present invention.

The following examples will provide the person skilled in the art with further embodiments of the present invention. They are not meant to limit the invention in any way.

### Examples

The slump flow at different times was measured in a slump flow test according to EN 12350-8 in examples 1 - 4 and according to EN 12350-5 in example 5. The slump flow is thus a measure for the workability of the respective mixture. The slump flow test was performed on individual samples at defined points of time after mixing with mixing water. The respective times are given in below Tables 2 to 12. The diameter of the cone used for slump flow measurements was 37.5 mm, thus a value of 37.5 mm in the below tables 2 to 13 (examples 1 - 4) corresponds to a mix which has essentially no slump flow. In table 14 (example 5) the term "not measurable" is used in cases where essentially no slump flow could be measured.

Heat flow curves were measured in an isothermal process as described in standard ASTM C1702-17. Examples were measured using an I-CAL 8000 from Calmetrix or a TAM AIR from TM Instruments. The maximum heat release (max. heat release) which is reported in the following tables is the time after which the respective heat flow curve reaches its global maximum. The time needed to reach this global maximum is a measure for the hardening speed and, for example, the strength development. A shorter time is linked to a faster hardening.

Compressive strength was measured according to DIN EN 196-1 on prisms of 40 x 40 x 160 mm after the time indicated in below tables.

Sodium gluconate, mannitol, dulcitol, sucrose, glucose, maltose, lactose, sorbitol, ascorbic acid, sodium glucuronate, lithium xylonate, citric acid, sodium citrate, triethanolamine, and triisopropanolamine were purchased from Sigma-Aldrich with ≥ 95 % purity.

The following Table 1 gives an overview of other chemicals used. All chemicals were used as supplied unless otherwise noted.

**Table 1: chemicals used**

| **Name** | **Description** |
|---|---|
| Metakaolin | Metastar 501 from Imerys kaolin |
| Limestone | Nekafill 15 from Kalkfabrik Netstal AG |
| OPC | CEM I 42.5 N |
| Gypsum | CaSO₄ (> 99% purity) from Sigma-Aldrich |
| Aggregates | Mixture of 25 wt.-% sand (0-1 mm), 37 wt.-% gravel (1-4 mm); 38 wt.-% gravel (4-8 mm) |
| PCE-1 | Polymethacrylate (Mn = 7'000 g/mol), esterified with methoxypolyethylene glycol (Mn = 1'000 g/mol) to yield a molar ratio of carboxylic acid groups to side chains of 1.76 |
| PCE-2 | Polymethacrylate (Mn = 7'000 g/mol), esterified with a 1:3.5 mixture by weight of methoxypolyethylene glycol (Mn = 1'000 g/mol) and methoxypolyethylene glycol (Mn = 3'000 g/mol) to yield a molar ratio of carboxylic acid groups to side chains of 3 |
| PCE-3 | Copolymer of acrylic acid and methyallyl alcohol started polyethylene glycol (Mn = 2'400 g/mol) to yield a molar ratio of carboxylic acid groups to side chains of 3.6 |
| PCE-4 | Copolymer of acrylic acid and methyallyl alcohol started polyethylene glycol (Mn = 2'400 g/mol) to yield a molar ratio of carboxylic acid groups to side chains of 2.2 |
| Caramel | Caramel (color), CAS 8028-89-5 |
| Melasse | 72-76% dry substance, min. 40% total sugars 840 - 880 g/kg organic substances, 100 - 150 g/kg crude ash |
| Vinasse | Vinasse M from Manuelita S.A. |

### Reference example

Reference examples Ref-1 to Ref-4 were prepared by adding the respective amounts of PCE, sodium gluconate, and water as indicated in below table 2 to the respective amount of OPC. The resulting mixture was mixed on a Heidolph propeller mixer for 2 min at 1'500rpm. The respective testing started after these 2 minutes mixing time.

**Table 2: Compositions of reference examples Ref-1 to Ref-4.**

| | **Ref-1** | **Ref-2** | **Ref-3** | **Ref-4** |
|---|---|---|---|---|
| OPC | 100 | 100 | 100 | 100 |
| PCE-1 | 0 | 0.053 | 0 | 0.053 |
| Sodium gluconate | 0 | 0 | 0.025 | 0.025 |
| water | 46 | 46 | 46 | 46 |
| Slump @ 0 min [mm] | 93 | 95 | 103 | 124 |
| Slump @ 30 min [mm] | 93 | 90 | 86 | 95 |
| Slump @ 60 min [mm] | 94 | 89 | 85 | 98 |
| Slump @ 90 min [mm] | 75 | 84 | 85 | 95 |
| Slump @ 120 min [mm] | 37.5 | 85 | 84 | 92 |
| Max. heat release [h] | 9.74 | 12.29 | 12.77 | 16.11 |

The reference examples in table 2 show that addition of either a PCE or sodium gluconate can positively influence the initial slump flow as well as the slump life, and thus the workability, of a mix based on pure Portland cement (compare Ref-2 and Ref-3 to Ref-1). The mix is retarded by either addition, as can be seen from the time to maximum heat release of the system. The synergistical improvement of slump life observed by the concomitant addition of a PCE and sodium gluconate (Ref-4) is only small in this case and not sufficient for practical application. The retardation of the system with PCE and sodium gluconate added is increased but still acceptable for practical applications.

### Example 1

The respective binders used to prepare references Ref-1 to Ref-5 (which are not according to the present invention) as well as examples 1-1 to 1-20 (which are according to the present invention) were prepared by mixing OPC, metakaolin, limestone, and gypsum in the amounts indicated in the following table 3 in dry state at 23°C / 50% r.h. on a Heidolph propeller mixer for 2 min at 1'500rpm. A visually homogeneous powder resulted in every case.

**Table 3: Composition of binders 1 to 5 (all numbers refer to mass parts)**

| | **OPC** | **Metakaolin** | **Limestone** | **Gypsum** |
|---|---|---|---|---|
| Binder 1 | 50 | 31.5 | 15 | 3.5 |
| Binder 2 | 50 | 25.2 | 21.3 | 3.5 |
| Binder 3 | 50 | 18.9 | 27.6 | 3.5 |
| Binder 4 | 50 | 12.6 | 33.9 | 3.5 |
| Binder 5 | 50 | 6.3 | 40.2 | 3.5 |
| Binder 6 | 50 | 15.7 | 30.8 | 3.5 |

The respective amounts of PCE, sodium gluconate, and water as indicated in below tables 4 - 6 were then added to the type and amount of binder composition indicated in these tables. The resulting mixture was mixed on a Heidolph propeller mixer for 2 min at 1'500rpm. The respective testing started after these 2 minutes mixing time.

The following tables 4 - 6 show that the initial slump flow as well as the slump life, and thus the workability, of the respective binder compositions can be significantly improved when an admixture of the present invention is used as compared to the initial slump flow and the slump life, and thus the workability, of the same binder composition but only using a PCE or only an additive (compare examples 1-1 to 1-4 with Ref-5 to Ref-7, examples 1-5 to 1-8 with Ref-8 to Ref-10, examples 1-9 to 1-12 with Ref-11 to Ref-13, examples 1-13 to 1-16 with Ref-14 to Ref-16, examples 1-17 to 1-20 with Ref-17 to Ref-19).

Tables 4 - 6 also show that the use of an admixture according to the present invention somewhat increases the time needed to reach the maximum heat release. However, all inventive examples 1-1 to 1-20 show an acceptable time until maximum heat release and thus also an acceptable development of compressive strength. A time of max. 20 h until the maximum heat release is reached is acceptable for the present context.

An admixture of the present invention is thus able to increase the initial slump flow and the slump life, and thus the workability, of a binder composition comprising Portland cement, calcined clay, and limestone while maintaining development of strength which is perfectly acceptable for practical applications.

**Table 4: Composition of Ref-5 to Ref-10, examples 1-1 to 1-8 (numbers refer to weight in gram)**

| | **Ref-5** | **Ref-6** | **Ref-7** | **1-1** | **1-2** | **1-3** | **1-4** | **Ref-8** | **Ref-9** | **Ref-10** | **1-5** | **1-6** | **1-7** | **1-8** |
|---|---|---|---|---|---|---|---|---|---|---|---|---|---|---|
| Binder 1 | 100 | 100 | 100 | 100 | 100 | 100 | 100 | | | | | | | |
| Binder 2 | | | | | | | | 100 | 100 | 100 | 100 | 100 | 100 | 100 |
| PCE-1 | | 0.21 | | 0.21 | 0.21 | 0.21 | 0.21 | | 0.185 | | 0.185 | 0.185 | 0.185 | 0.185 |
| Sodium gluconate | | | 0.1 | 0.025 | 0.05 | 0.075 | 0.1 | | | 0.088 | 0.022 | 0.044 | 0.066 | 0.088 |
| water | 46 | 46 | 46 | 46 | 46 | 46 | 46 | 46 | 46 | 46 | 46 | 46 | 46 | 46 |
| Slump@0 min [mm] | 37.5 | 92 | 37.5 | 108 | 117 | 114 | 113 | 37.5 | 124 | 37.5 | 125 | 126 | 152 | 134 |
| Slump@30 min [mm] | | 75 | 37.5 | 114 | 119 | 126 | 124 | | 117 | 37.5 | 125 | 128 | 149 | 155 |
| Slump@60 min [mm] | | n.m. | 37.5 | 87 | 108 | 117 | 130 | | 95 | 37.5 | 113 | 124 | 149 | 151 |
| Slump@90 min [mm] | | | 37.5 | n.m. | 95 | 112 | 121 | | 74 | 37.5 | 99 | 116 | 151 | 151 |
| Slump@120 min [mm] | | | 37.5 | | n.m. | 104 | 124 | | n.m. | 37.5 | 81 | 102 | 137.5 | 152 |
| Max. heat release [h] | 7.38 | 10.55 | 13.1 | 11.44 | 13.93 | 16.02 | 19.9 | 7.35 | 12.95 | 12.3 | 14.93 | 16.46 | 20.02 | 23.17 |

| | | | | | | | | | | | | | | |
|---|---|---|---|---|---|---|---|---|---|---|---|---|---|---|
| n.m.: not measured | | | | | | | | | | | | | | |

**Table 5: Composition of Ref-11 to Ref-16, examples 1-9 to 1-16 (numbers refer to weight in gram)**

| | **Ref-11** | **Ref-12** | **Ref-13** | **1-9** | **1-10** | **1-11** | **1-12** | **Ref-14** | **Ref-15** | **Ref-16** | **1-13** | **1-14** | **1-15** | **1-16** |
|---|---|---|---|---|---|---|---|---|---|---|---|---|---|---|
| Binder 3 | 100 | 100 | 100 | 100 | 100 | 100 | 100 | 100 | | | | | | |
| Binder 4 | | | | | | | | | 100 | 100 | 100 | 100 | 100 | 100 |
| PCE-1 | | 0.15 | | 0.15 | 0.15 | 0.15 | 0.15 | | 0.1 | | 0.1 | 0.1 | 0.1 | 0.1 |
| Sodium gluconate | | | 0.071 | 0.018 | 0.036 | 0.053 | 0.071 | | | 0.048 | 0.012 | 0.024 | 0.036 | 0.048 |
| water | 46 | 46 | 46 | 46 | 46 | 46 | 46 | 46 | 46 | 46 | 46 | 46 | 46 | 46 |
| Slump@0 min [mm] | 37.5 | 120 | 37.5 | 123 | 134 | 132 | 140 | 37.5 | 107 | 37.5 | 115 | 124 | 128 | 136 |
| Slump@30 min [mm] | | 110 | 37.5 | 120 | 133 | 142 | 151 | | 95 | 37.5 | 97 | 111 | 121 | 135 |
| Slump@60 min [mm] | | 84 | 37.5 | 105 | 130 | 141 | 152 | | 70 | 37.5 | 81 | 104 | 116 | 134 |
| Slump@90 min [mm] | | n.m. | 37.5 | 88 | 120 | 135 | 143 | | n.m. | 37.5 | 61 | 88 | 112 | 130 |
| Slump@120 min [mm] | | | 37.5 | n.m. | 106 | 130 | 148 | | | 37.5 | n.m. | 74 | 99 | 124 |
| Max. heat release [h] | 7.6 | 12.62 | 12.3 | 14.18 | 16 | 18.33 | 20.87 | 8.11 | 10.98 | 12.0 | 12.17 | 13.53 | 15.04 | 18.83 |

| | | | | | | | | | | | | | | |
|---|---|---|---|---|---|---|---|---|---|---|---|---|---|---|
| n.m.: not measured | | | | | | | | | | | | | | |

**Table 6: Composition of Ref-17 to Ref-19, examples 1-17 to 1-20 (numbers refer to weight in gram)**

| | **Ref-17** | **Ref-18** | **Ref-19** | **1-17** | **1-18** | **1-19** | **1-20** |
|---|---|---|---|---|---|---|---|
| Binder 5 | 100 | 100 | 100 | 100 | 100 | 100 | 100 |
| PCE-1 | | 0.063 | | 0.063 | 0.063 | 0.063 | 0.063 |
| Sodium gluconate | | | 0.03 | 0.008 | 0.015 | 0.023 | 0.03 |
| water | 46 | 46 | 46 | 46 | 46 | 46 | 46 |
| Slump @ 0 min [mm] | 37.5 | 123 | 107 | 123 | 127 | 130 | 138 |
| Slump @ 30 min [mm] | | 105 | 65 | 104 | 113 | 116 | 126 |
| Slump @ 60 min [mm] | | 91 | 37.5 | 89 | 100 | 105 | 121 |
| Slump @ 90 min [mm] | | 75 | 37.5 | 76 | 89 | 96 | 113 |
| Slump @ 120 min [mm] | | 72 | 37.5 | 71 | 82 | 95 | 107 |
| Max. heat release [h] | 8.46 | 10.08 | 11.2 | 11.22 | 11.79 | 12.73 | 13.12 |

| | | | | | | | |
|---|---|---|---|---|---|---|---|
| n.m.: not measured | | | | | | | |

### Example 2

Examples 2 shows the effect of different additives.

Inventive examples 2-1 to 2-44 were prepared in the same way as examples 1-1 to 1-20 above except that different additives were used (s. tables 7 - 10 for details).

The following tables 7 - 10 show that additives according to the present invention are able to increase the initial slump flow and the especially the slump life, and thus the workability, of a binder composition according to the invention. All examples 2-1 to 2-44 can be compared to references Ref-5 to Ref-7 from Example 1.

**Table 7: Composition of examples 2-1 to 2-12 (numbers refer to weight in gram)**

| | **2-1** | **2-2** | **2-3** | **2-4** | **2-5** | **2-6** | **2-7** | **2-8** | **2-9** | **2-10** | **2-11** | **2-12** |
|---|---|---|---|---|---|---|---|---|---|---|---|---|
| Binder 1 | 100 | 100 | 100 | 100 | 100 | 100 | 100 | 100 | 100 | 100 | 100 | 100 |
| PCE-1 | 0.21 | 0.21 | 0.21 | 0.21 | 0.21 | 0.21 | 0.21 | 0.21 | 0.21 | 0.21 | 0.21 | 0.21 |
| Mannitol | 0.05 | 0.1 | 0.5 | | | | | | | | | |
| Dulcitol | | | | 0.05 | 0.1 | 0.5 | | | | | | |
| Sucrose | | | | | | | 0.05 | 0.1 | 0.5 | | | |
| Glucose | | | | | | | | | | 0.05 | 0.1 | 0.5 |
| water | 46 | 46 | 46 | 46 | 46 | 46 | 46 | 46 | 46 | 46 | 46 | 46 |
| Slump@0 min [mm] | 124 | 127 | 90 | 136 | 131 | 88 | 119 | 126 | 141 | 115 | 116 | 105 |
| Slump@30 min [mm] | 102 | 88 | 64 | 113 | 107 | 71 | 115 | 136 | 146 | 95 | 106 | 48 |
| Slump@60 min [mm] | 61 | 76 | 37.5 | 85 | 106 | 59 | 96 | 130 | 137 | 37.5 | 78 | 37.5 |
| Slump@90 min [mm] | 37.5 | 58 | | 37.5 | 88 | 66 | 79 | 124 | 126 | | 37.5 | |
| Slump@120 min [mm] | | 37.5 | | | 55 | 65 | 37.5 | 116 | 119 | | | |

**Table 8: Composition of examples 2-13 to 2-21 (numbers refer to weight in gram)**

| | **2-13** | **2-14** | **2-15** | **2-16** | **2-17** | **2-18** | **2-19** | **2-20** | **2-21** |
|---|---|---|---|---|---|---|---|---|---|
| Binder 1 | 100 | 100 | 100 | 100 | 100 | 100 | 100 | 100 | 100 |
| PCE-1 | 0.21 | 0.21 | 0.21 | 0.21 | 0.21 | 0.21 | 0.21 | 0.21 | 0.21 |
| Caramel | 0.05 | 0.1 | 0.5 | | | | | | |
| Melasse | | | | 0.05 | 0.1 | 0.5 | | | |
| Vinasse | | | | | | | 0.05 | 0.1 | 0.5 |
| water | 46 | 46 | 46 | 46 | 46 | 46 | 46 | 46 | 46 |
| Slump@0 min [mm] | 105 | 103 | 91 | 122 | 124 | 129 | 112 | 105 | 55 |
| Slump@30 min [mm] | 94 | 104 | 103 | 109 | 124 | 138 | 93 | 94 | 75 |
| Slump@60 min [mm] | 37.5 | 85 | 102 | 81 | 110 | 131 | 37.5 | 37.5 | 76 |
| Slump@90 min [mm] | | 55 | 104 | 37.5 | 96 | 121 | | | 74 |
| Slump@120 min [mm] | | 37.5 | 101 | | 82 | 118 | | | 73 |

**Table 9: Composition of examples 2-22 to 2-33 (numbers refer to weight in gram)**

| | **2-22** | **2-23** | **2-24** | **2-25** | **2-26** | **2-27** | **2-28** | **2-29** | **2-30** | **2-31** | **2-32** | **2-33** |
|---|---|---|---|---|---|---|---|---|---|---|---|---|
| Binder 1 | 100 | 100 | 100 | 100 | 100 | 100 | 100 | 100 | 100 | 100 | 100 | 100 |
| PCE-1 | 0.21 | 0.21 | 0.21 | 0.21 | 0.21 | 0.21 | 0.21 | 0.21 | 0.21 | 0.21 | 0.21 | 0.21 |
| Maltose | 0.05 | 0.1 | 0.5 | | | | | | | | | |
| Lactose | | | | 0.05 | 0.1 | 0.5 | | | | | | |
| Sorbitol | | | | | | | 0.05 | 0.1 | 0.5 | | | |
| Ascorbic acid | | | | | | | | | | 0.05 | 0.1 | 0.5 |
| water | 46 | 46 | 46 | 46 | 46 | 46 | 46 | 46 | 46 | 46 | 46 | 46 |
| Slump@0 min [mm] | 116 | 117 | 106 | 116 | 117 | 109 | 135 | 159 | 76 | 116 | 82 | 53 |
| Slump@30 min [mm] | 98 | 109 | 83 | 109 | 98 | 51 | 114 | 126 | 95 | 109 | 98 | 51 |
| Slump@60 min [mm] | 61 | 82 | 68 | 94 | 99 | 50 | 80 | 125 | 75 | 94 | 99 | 50 |
| Slump@90 min [mm] | 46 | 60 | 61 | 37.5 | 96 | 37.5 | 53 | 114 | 76 | 37.5 | 96 | 37.5 |
| Slump@120 min [mm] | | 37.5 | 60 | | 91 | | 37.5 | 94 | 74 | | 91 | |

**Table 10: Composition of examples 2-34 to 2-41 (numbers refer to weight in gram)**

| | **2-34** | **2-35** | **2-36** | **2-37** | **2-38** | **2-39** | **2-40** | **2-42** | **2-43** |
|---|---|---|---|---|---|---|---|---|---|
| Binder 1 | 100 | 100 | 100 | 100 | 100 | 100 | 100 | 100 | 100 |
| PCE-1 | 0.21 | 0.21 | 0.21 | 0.21 | 0.21 | 0.21 | 0.21 | 0.21 | 0.21 |
| Sodium glucuronate | 0.05 | 0.1 | 0.5 | | | | | | |
| Lithium xylonate | | | | 0.05 | 0.1 | | | | |
| Citric acid | | | | | | 0.05 | 0.1 | | |
| Sodium citrate | | | | | | | | 0.05 | 0.1 |
| water | 46 | 46 | 46 | 46 | 46 | 46 | 46 | 46 | 46 |
| Slump@0 min [mm] | 132 | 141 | 37.5 | 133 | 142 | 98 | 75 | 109 | 76 |
| Slump@30 min [mm] | 125 | 135 | 73 | 115 | 129 | 95 | 66 | 97 | 82 |
| Slump@60 min [mm] | 110 | 131 | 100 | 84 | 127 | 79 | 65 | 67 | 78 |
| Slump@90 min [mm] | 78 | 130 | 106 | 37.5 | 121 | 37.5 | 64 | 37.5 | 60 |
| Slump@120 min [mm] | 37.5 | 126 | 104 | | 115 | | 37.5 | | 37.5 |

**Table 11: Composition of references Ref-20 to Ref-25 (numbers refer to weight in gram)**

| | **Ref-20** | **Ref-21** | **Ref-22** | **Ref-23** | **Ref-24** | **Ref-25** |
|---|---|---|---|---|---|---|
| Binder 1 | 100 | 100 | 100 | 100 | 100 | 100 |
| PCE-1 | 0.21 | 0.21 | 0.21 | 0.21 | 0.21 | 0.21 |
| Triethanolamine | 0.05 | 0.1 | 0.5 | | | |
| Triisopropanolamine | | | | 0.05 | 0.1 | 0.5 |
| water | 46 | 46 | 46 | 46 | 46 | 46 |
| Slump@0 min [mm] | 116 | 114 | 90 | 117 | 119 | 120 |
| Slump@30 min [mm] | 88 | 90 | 37.5 | 80 | 66 | 64 |
| Slump@60 min [mm] | 37.5 | 37.5 | | 37.5 | 37.5 | 37.5 |
| Slump@90 min [mm] | | | | | | |
| Slump@120 min [mm] | | | | | | |

The above references Ref-20 to Ref-25 show that the use of either triethanolamine (TEA) or triisoproanolamine (TIPA) do not improve the workability of binder compositions of the present invention to a satisfying degree (compare for example to Ref-5 and examples 1-1 to 1-4).

### Example 3

Examples 3 shows the effect of different PCE.

Inventive examples 3-1 to 3-10 and references Ref-26 to Ref-28 (which are not according to the invention) were prepared in the same way as examples 1-1 to 1-20 above except that different PCE were used. Example 3-1 is identical to example 1-4.

The following table 12 shows that PCE of different structure and when combined with an additive of the present invention are able to increase the initial slump flow and the especially the slump life, and thus the workability, of a binder composition according to the invention. None of the PCE works in the same way without addition of the additive (see references Ref-26 to Ref-28).

**Table 12: Composition of Ref-26 to Ref-28, examples 3-1 to 3-10 (numbers refer to weight in gram)**

| | **3-1** | **Ref-26** | **3-2** | **3-3** | **3-4** | **Ref-27** | **3-5** | **3-6** | **3-7** | **Ref-28** | **3-8** | **3-9** | **3-10** |
|---|---|---|---|---|---|---|---|---|---|---|---|---|---|
| Binder 1 | 100 | 100 | 100 | 100 | 100 | 100 | 100 | 100 | 100 | 100 | 100 | 100 | 100 |
| PCE-1 | 0.21 | | | | | | | | | | | | |
| PCE-2 | | 0.181 | 0.181 | 0.181 | 0.181 | | | | | | | | |
| PCE-3 | | | | | | 0.142 | 0.142 | 0.142 | 0.142 | | | | |
| PCE-4 | | | | | | | | | | 0.194 | 0.194 | 0.194 | 0.194 |
| Sodium gluconate | 0.1 | | 0.05 | 0.1 | 0.2 | | 0.05 | 0.1 | 0.2 | | 0.05 | 0.1 | 0.2 |
| water | 46 | 46 | 46 | 46 | 46 | 46 | 46 | 46 | 46 | 46 | 46 | 46 | 46 |
| Slump @ 0 min [mm] | 113 | 107 | 138 | 162 | 112 | 86 | 125 | 128 | 37.5 | 80 | 104 | 90 | 48 |
| Slump @ 30 min [mm] | 124 | n.m. | 111 | 162 | 144 | n.m. | 106 | 159 | 123 | n.m. | 102 | 118 | 92 |
| Slump @ 60 min [mm] | 130 | | n.m. | 155 | 153 | | n.m. | 157 | 136 | | 62 | 116 | 100 |
| Slump @ 90 min [mm] | 121 | | | 148 | 156 | | | 151 | 143 | | 37.5 | 110 | 102 |
| Slump @ 120 min [mm] | 124 | | | 125 | 155 | | | 145 | 146 | | | 86 | 104 |

| | | | | | | | | | | | | | |
|---|---|---|---|---|---|---|---|---|---|---|---|---|---|
| n.m.: not measured | | | | | | | | | | | | | |

### Example 4

Example 4 shows the effect of different dosage of PCE at fixed dosages of sodium gluconate.

Inventive examples 4-1 to 4-20 were prepared in the same way as examples 1-1 to 1-20 above except that the dosages of PCE and sodium gluconate as indicated in below table 13 were used.

The following table 13 shows that the initial slump flow as well as the slump life, and thus the workability, of the respective binder compositions can be significantly improved when an admixture of the present invention is used if compared to reference compositions without the PCE and/or without the additive (compare to references Ref-5 to Ref-19 from Example 1).

Similar to the results from Example 1, the results in table 13 show that the use of an admixture according to the present invention somewhat increases the time needed to reach the maximum heat release. However, all inventive examples 4-1 to 4-20 show an acceptable time until maximum heat release and thus also an acceptable development of compressive strength.

An admixture of the present invention is thus able to increase the initial slump flow and the slump life, and thus the workability, of a binder composition comprising Portland cement, calcined clay, and limestone while maintaining development of strength which is perfectly acceptable for practical applications.

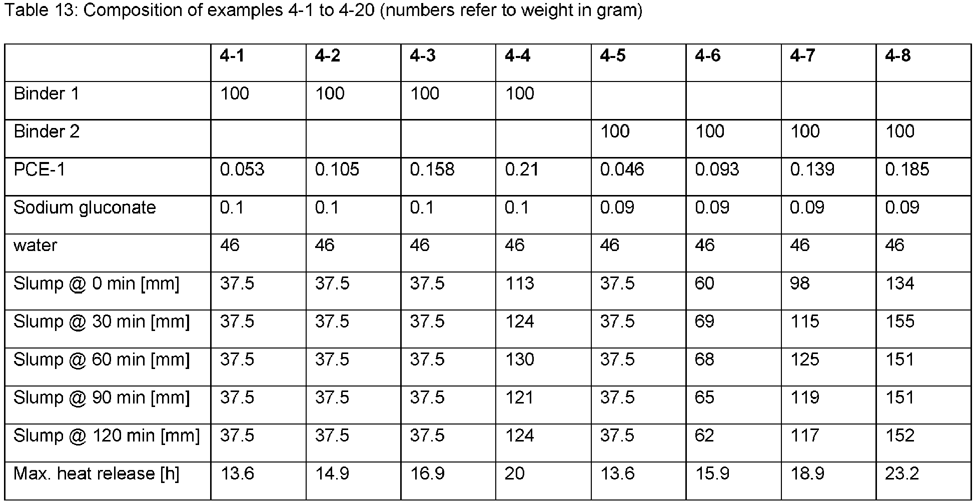

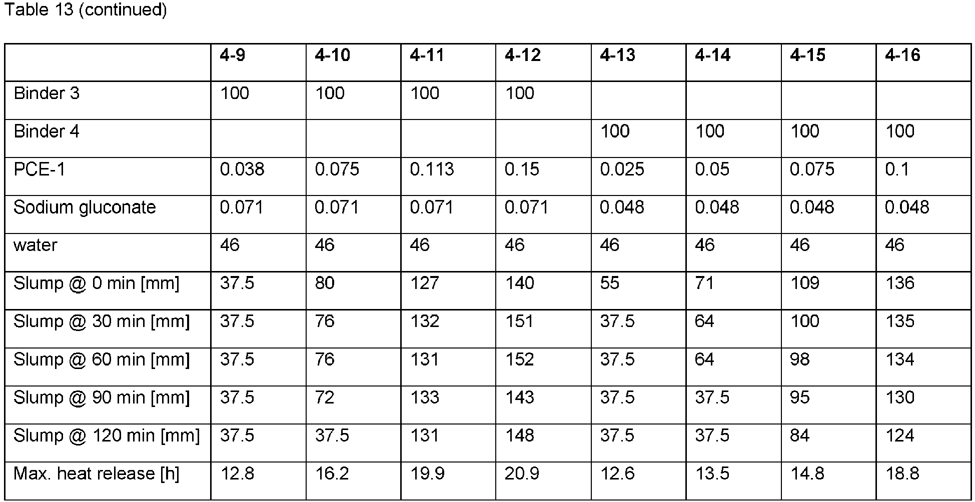

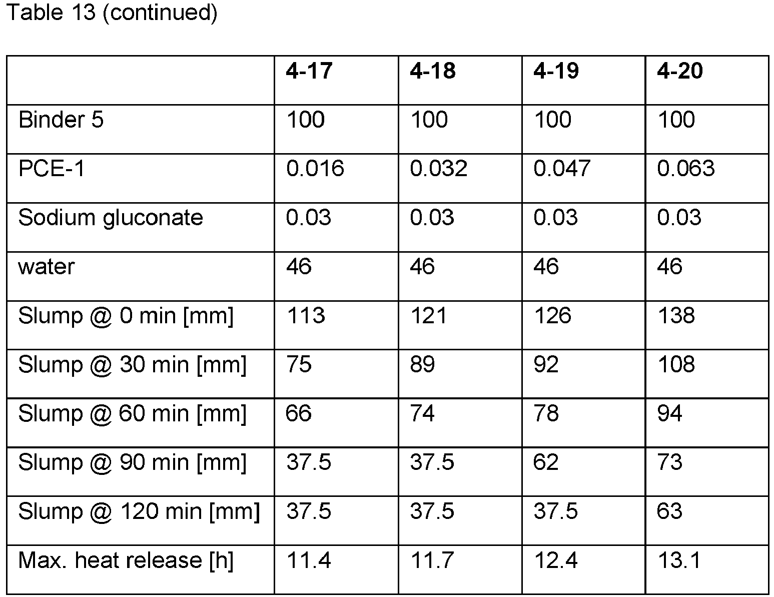

### Example 5

Example 5 shows the effect of the addition of an admixture of the present invention to a mortar composition based on a binder comprising ordinary Portland cement, metakaolin, limestone, and gypsum.

Inventive examples 5-1 to 5-10 and references Ref-29 to Ref-36 (which are not according to the present invention) were prepared by mixing binder, PCE, sodium gluconate, limestone and aggregates in the amounts as given in below table 14 for 1 minute at 23°C / 50% r.h. on a Heidolph propeller mixer at 1'500rpm. A visually homogeneous powder resulted in every case. An amount of water was added to achieve a water to binder ratio (w/b) of 0.5 in every case. Mixing was then continued for 3 minutes on a Heidolph propeller mixer at 1'500rpm.

Measurements were performed as indicated above.

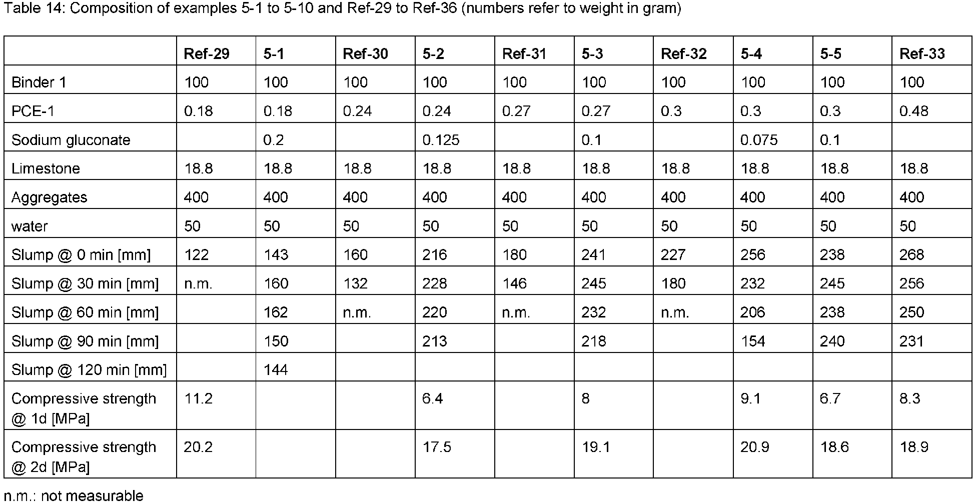

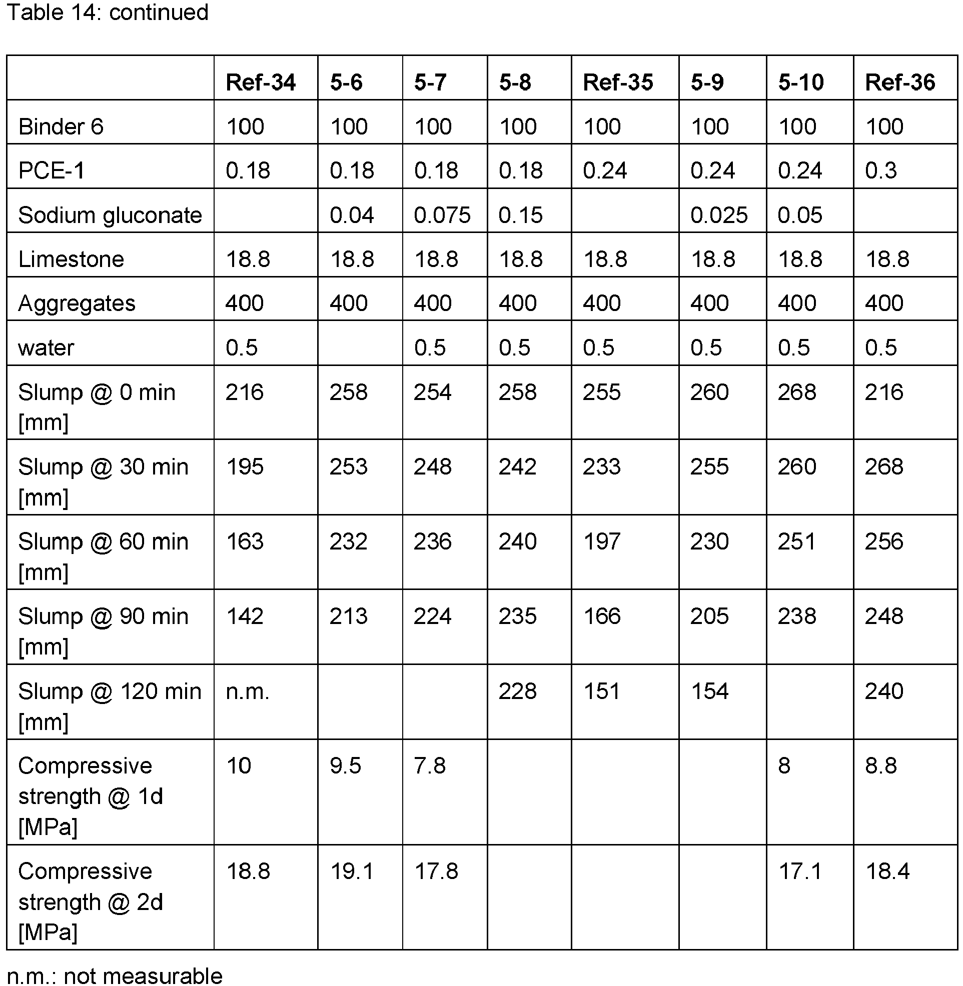

It can be seen from the above table 14, that the addition of an admixture of the present invention to a binder of the present invention leads to a better workability, especially a higher slump flow, as compared to the same composition but only comprising a PCE. At the same time, the compressive strength of inventive examples as measured after 1d and after 2d is at the same level as the compressive strength of the respective references. Thus, retardation of the curing is acceptable for practical applications. It can furthermore be seen from the results of table 14 that the effect of an admixture of the present invention on a binder composition of the present invention is similar as an increase in the dosage of PCE. This the method of the present invention is also a way of reducing the dosage of PCE in a binder composition of the present invention.

## Claims

1. A method for increasing the workability of a binder composition comprising calcined clay, limestone, and Portland cement, said method comprising a step of adding an admixture comprising at least one polycarboxylate ether (PCE) and at least one additive selected from the group consisting of sugar acids, sugars, sugar alcohols, and hydroxycarboxylic acids.

2. A method according to any of the preceding claims, **characterized in that** the at least one polycarboxylate ether (PCE) is one copolymer or a mixture of two or more copolymers, wherein each copolymer comprises
(i) repeating units A of the general structure (I), 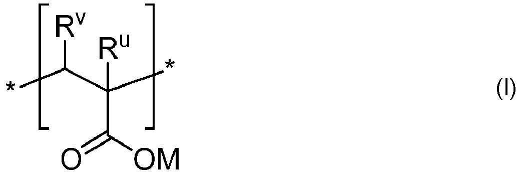 and
(ii) repeating units B of the general structure (II), 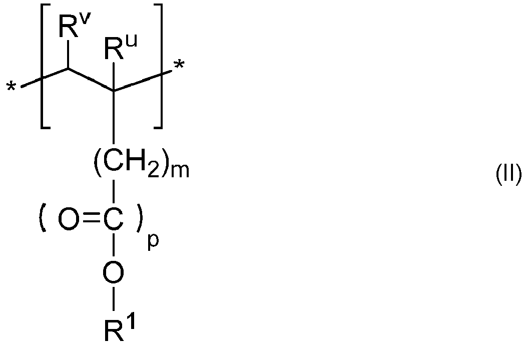 wherein
each R^{u} independently of one another is H or a methyl group,
each R^{v} independently of one another is H or COOM,
each M independently of one another is H, an alkali metal ion or an alkaline earth metal ion,
m = 0, 1, 2 or 3,
p = 0 or 1,
each R¹ independently of one another is -[YO]ₙ-R⁴, wherein Y is a C2- to C4-alkylene and R⁴ is H, C1- to C20-alkyl, -cyclohexyl or -alkylaryl, and n = 2 - 350,
and wherein the repeating units **A** and **B** in the copolymer have a molar ratio **A** : **B** between 10 : 90 - 90 :10, preferably 20 : 80 - 80 : 20, more preferably 30 : 70 - 80 : 20, especially 35 : 65 - 75 : 25.

3. A method according to any of the preceding claims, **characterized in that** the binder composition comprises calcined clay **(CC),** limestone **(L),** and Portland cement **(P)** in the following weight ratios:
**P : CC** is from 33 : 1 to 1 : 1, preferably from 8 : 1 to 1 : 1,
**CC : L** is from 10 : 1 to 1 : 33, preferably from 5 : 1 to 1 : 10, and
**P : L** is from 20 : 1 to 1 : 4, preferably from 5 : 1 to 1 : 1.

4. A method according to any of the preceding claims, **characterized in that** the calcined clay is metakaolin.

5. A method according to any of the preceding claims, **characterized in that** the admixture is added to the binder composition in such an amount that a weight ratio of the at least one additive to calcined clay is in the range of 1 : 1'500 to 1 : 10, preferably 1 : 800 to 1 : 100, more preferably 1 : 650 to 1 : 200, especially 1: 580 to 1 : 300.

6. A method according to any of the preceding claims, **characterized in that** the admixture is added to the binder composition in such an amount that a weight ratio of the at least one PCE to calcined clay is in the range of 1 : 600 to 1 : 50, preferably 1 : 500 to 1 : 100, especially 1 : 150 to 1 : 100.

7. A method according to any of the preceding claims, **characterized in that** the at least one PCE and the at least one additive are added in a weight ratio of the at least one PCE to the at least one additive of 20 : 1 to 1 : 10, preferably of 10 : 1 to 1 : 6, more preferably of 5 : 1 to 1 : 2, especially 5 : 1 to 1.5 : 1.

8. An admixture to be used in a method according to any of the preceding claims, said admixture comprising
a) at least one PCE
b) at least one additive selected from the group consisting of sugar acids, sugars, sugar alcohols, and hydroxycarboxylic acids.

9. An admixture according to claim 9, **characterized in that** it is a mono-component admixture.

10. An admixture according to claim 9, **characterized in that** it is a two-component admixture.

11. An admixture according to any of claims 9 - 11, **characterized in that** it consists of
a) one PCE
b) one additive selected from the group of sugar acids, sugars, sugar alcohols, and hydroxycarboxylic acids, and
c) optionally water,
wherein the PCE and the additive have a weight ratio of the PCE to the additive of 20 : 1 to 1 : 10, preferably of 10 : 1 to 1 : 6, more preferably of 5 : 1 to 1 : 2, especially 5 : 1 to 1.5 : 1.

12. A hardenable composition obtainable by a method of any of claims 1 - 8.

13. A hardenable composition according to claim 13, **characterized in that** it comprises
a) a binder composition comprising calcined clay **(CC),** limestone **(L),** and Portland cement **(P)** in weight ratios of **P : CC** from 33 : 1 to 1 : 1, preferably from 8 : 1 to 1 : 1, **CC : L** from 10 : 1 to 1 : 33, preferably from 5 : 1 to 1 : 10, and **P : L** from 20 : 1 to 1 : 4, preferably from 5 : 1 to 1 : 1,
b) at least one PCE, and
c) at least one additive selected from the group consisting of sugar acids, sugars, sugar alcohols, and hydroxycarboxylic acids.

14. A hardenable composition according to claim 14, **characterized in that** it further comprises water in a weight ratio of water to binder composition of between 0.1 - 0.6, preferably 0.2 - 0.5, especially 0.2 - 0.35.

15. A hardened body resulting from curing a hardenable composition, especially a mortar or concrete, according to claim 15.
